# FASCICULE DE BREVET EUROPEEN

(11) **EP 2 952 366 B1**
(45) Date de publication et mention de la délivrance du brevet: **13.07.2016**
(21) Numéro de dépôt: 15170152.1
(22) Date de dépôt: 01.06.2015
(51) Int. Cl.: B60C 25/132

(54) **DISPOSITIF ET PROCEDE DE MONTAGE/DEMONTAGE DE PNEUMATIQUES DE VEHICULES DU TYPE TRAMWAY**
VORRICHTUNG UND VERFAHREN ZUR REIFENMONTAGE/-DEMONTAGE AN FAHRZEUGEN VOM TYP STRASSENBAHN
DEVICE AND METHOD FOR MOUNTING/REMOVING TYRES OF TRAM VEHICLES AND THE LIKE

(30) Priorité: 02.06.2014 FR 1454986
(43) Date de publication de la demande: 09.12.2015
(73) Titulaire: Guernet Compresseurs, 89300 Joigny (FR)
(72) Inventeur: Guernet, Hervé, 89500 CHAUMOT (FR)
(74) Mandataire: Oudin, Stéphane

(56) Documents cités:
- WO-A1-94/23962
- SU-A1- 1 382 670

## Description

### Domaine technique

La présente invention concerne un dispositif et un procédé de montage/démontage de pneumatiques et plus particulièrement de pneumatiques de véhicules du type tramway.

Un dispositif de changement de pneumatique est connu par le document WO 94/23962.

### Technique antérieure

Il est connu depuis le milieu du XIX^{ème} siècle d'utiliser un tramway comme transport en commun urbain ou interurbain. La plupart des tramways comportent une rame de wagons et circulent sur des voies ferrées équipées de rails plats et implantées en site propre ou encastrées dans la voirie routière. Ce mode de transport est très pratique mais il est lié à la voie ferrée qui lui est spécifiquement dédiée, ladite voie nécessitant un coût d'investissement très important.

Pour pallier à ces inconvénients, il a été développé des tramways sur pneumatiques guidé par un galet suivant un rail central (guidage mécanique) ou par une cellule optique suivant un trait tracé sur son trajet (guidage optique). Outre un coût d'investissement moindre que celui d'un tramway classique, le tramway sur pneumatiques peut offrir la possibilité à la rame de quitter ponctuellement son tracé, en cas d'incident de parcours par exemple, voire de parcourir des sections entières de lignes non équipées de guidage, en mode trolleybus, à condition bien sûr que son mode d'alimentation en énergie soit compatible.

Compte tenu de la charge notamment, les pneumatiques des tramways sont très sollicités ce qui a pour conséquence de provoquer des usures importantes et nécessite un remplacement du pneumatique usagé. Dans la mesure où une roue d'un tramway (jante et pneumatique associé) pèse près de 150 kilogrammes, ce travail est fastidieux et long et nécessite de surcroît l'emploi d'un équipement lourd du type palan à chaîne et la présence de plusieurs ouvriers pour mener à bien cette opération de façon quasiment manuelle.

En outre, l'un des pneumatiques du tramway peut être crevé le long de son trajet habituel. Pour permettre au tramway de continuer à rouler le long de son trajet et rentrer à l'atelier de maintenance pour effectuer le remplacement du pneumatique crevé, chaque roue est équipée de trois segments boulonnés entre eux autour de la jante à l'intérieur du pneumatique. Lorsqu'un pneumatique est crevé, ces trois segments viennent en contact avec la bande de roulement dudit pneumatique et permettent au tramway de circuler en sécurité malgré un pneumatique crevé.

Ces segments, qui sont particulièrement intéressants en termes de sécurité, alourdissent encore la roue et compliquent significativement le montage/démontage du pneumatique.

Enfin, on comprend bien qu'une pièce encombrante et lourde telle qu'une roue de tramway représente toujours un risque important pour l'intégrité physique des ouvriers qui la manipule.

### Exposé de l'invention

Le but de la présente invention est donc de pallier les inconvénients précédemment cités et de proposer un dispositif de montage/démontage de pneumatique de tramway facile à mettre en oeuvre, un montage/démontage rapide sans nécessiter l'emploi d'équipement lourd du type palan à chaîne et la présence de plusieurs ouvriers.

Conformément à l'invention, il est donc proposé un dispositif de montage/démontage de pneumatique d'une roue de tramway munie d'une jante assurant la liaison entre les deux flancs dudit pneumatique et le tramway, et une pluralité de segments fixés autour de la jante à l'intérieur du pneumatique lorsqu'il est monté sur ladite jante. Ledit dispositif est remarquable en ce qu'il comporte :
- une base,
- un premier châssis articulé à ladite base autour d'un premier axe sensiblement horizontal entre une première position dans laquelle l'axe longitudinal du premier châssis est sensiblement vertical et une deuxième position dans laquelle ledit axe longitudinal forme un angle α aigu avec la base,
- un mandrin monté coulissant sur le premier châssis le long de son axe longitudinal et agencé pour solidariser et faire tourner la roue autour d'un deuxième axe de rotation sensiblement perpendiculaire audit axe longitudinal,
- un deuxième châssis comprenant deux barres disposées de part et d'autre du premier châssis et de manière à ce que leurs dessus définissent un plan sensiblement parallèle à l'axe longitudinal dudit premier châssis lorsqu'il est dans sa deuxième position, lesdites barres étant mobiles entre une position rétractée et une position déployée dans laquelle elles sont agencées pour coopérer avec l'un des flancs du pneumatique pour dégager un espace suffisant entre ledit flanc et la jante afin de permettre à un opérateur d'accéder aux segments.

Le dispositif comporte en outre un bras fixé à l'extrémité libre dudit premier châssis et extensible selon une direction sensiblement perpendiculaire à son axe longitudinal, et un porte-outil issu de l'extrémité libre dudit bras et s'étendant en direction du mandrin de façon sensiblement perpendiculaire audit bras, le porte-outil recevant à son extrémité libre un outil.

De manière avantageuse, chaque barre est reliée à la base par une paire de guides extensibles sensiblement parallèles entre eux, ladite barre étant mobile suivant la direction d'extension des deux guides associés correspondant à une direction sensiblement perpendiculaire à l'axe longitudinal dudit premier châssis lorsque ce dernier est dans sa deuxième position.

Le premier châssis est avantageusement mis en mouvement autour dudit premier axe grâce à un premier actionneur articulé entre le premier châssis et la base.

Le premier actionneur est de préférence du type vérin linéaire hydraulique.

De manière avantageuse, chaque barre est mise en mouvement grâce à un deuxième actionneur disposé entre chaque barre et la base.

Le deuxième actionneur est de préférence du type vérin linéaire pneumatique.

De manière avantageuse, l'angle α est compris entre 10 et 30 degrés.

Selon un mode de réalisation préféré, le dispositif est associé avec une plateforme de travail montée sur quatre roulettes et disposant d'emplacements destinés à recevoir l'outillage spécifique nécessaire aux opérations de montage/démontage du pneumatique.

L'invention concerne également un procédé de montage/démontage de pneumatique d'une roue de tramway avec le dispositif selon l'invention, ladite roue comportant une jante assurant la liaison entre les deux flancs dudit pneumatique et le tramway, et une pluralité de segments fixés autour de la jante à l'intérieur du pneumatique lorsqu'il est monté sur ladite jante, ledit procédé étant remarquable en ce qu'il se compose au moins les étapes suivantes :
- blocage de la roue sur le mandrin ;
- mise en position de travail de l'outil du porte-outil, grâce au(x) déplacement (s) du bras et/ou du mandrin ;
- dégagement hors de la jante d'un des flancs du pneumatique ;
- mise en mouvement du premier châssis jusqu'à sa deuxième position ;
- mise en mouvement des barres du deuxième châssis jusqu'à leur position déployée pour venir coopérer avec le flanc restant dans la jante et dégager suffisamment d'espace entre ledit flanc et la jante pour permettre à un opérateur d'accéder aux segments ;
- démontage desdits segments ;
- dégagement hors de la jante du flanc du pneumatique restant dans la jante.

### Description sommaire des figures

D'autres avantages et caractéristiques ressortiront mieux de la description qui va suivre d'un mode d'exécution d'un dispositif de montage/démontage de pneumatique de tramway selon l'invention en référence aux figures annexées sur lesquelles :
- la figure 1 est une vue en perspective coupée d'une roue de tramway ;
- la figure 2 est une vue de côté d'un dispositif de montage/démontage de pneumatiques selon l'invention en position verticale ;
- la figure 3 est une vue de côté du dispositif de montage/démontage de la figure 2 en position inclinée les actionneurs de soulèvement étant en position rétractée ;
- la figure 4 est une vue de côté du dispositif de montage/démontage de la figure 2 en position inclinée les actionneurs de soulèvement étant en position déployée.

### Meilleure manière de réaliser l'invention technique

On décrira ci-après un dispositif de montage/démontage de pneumatiques de tramways disposé sur le sol sensiblement horizontal d'un atelier de maintenance, par exemple. Il va de soi que le sol sur lequel est disposé ledit dispositif pourra être plus ou moins incliné, les termes tels que, par exemple, vertical et/ou horizontal seront alors à adapter en fonction de l'inclinaison dudit sol. De même, il va également de soi que ledit dispositif pourra être embarqué sur un véhicule avantageusement du type utilitaire léger et être utilisé pour monter/démonter tout type de pneumatiques installés sur d'autres types de véhicules, notamment les camions poids lourds, sans sortir du cadre de la présente invention.

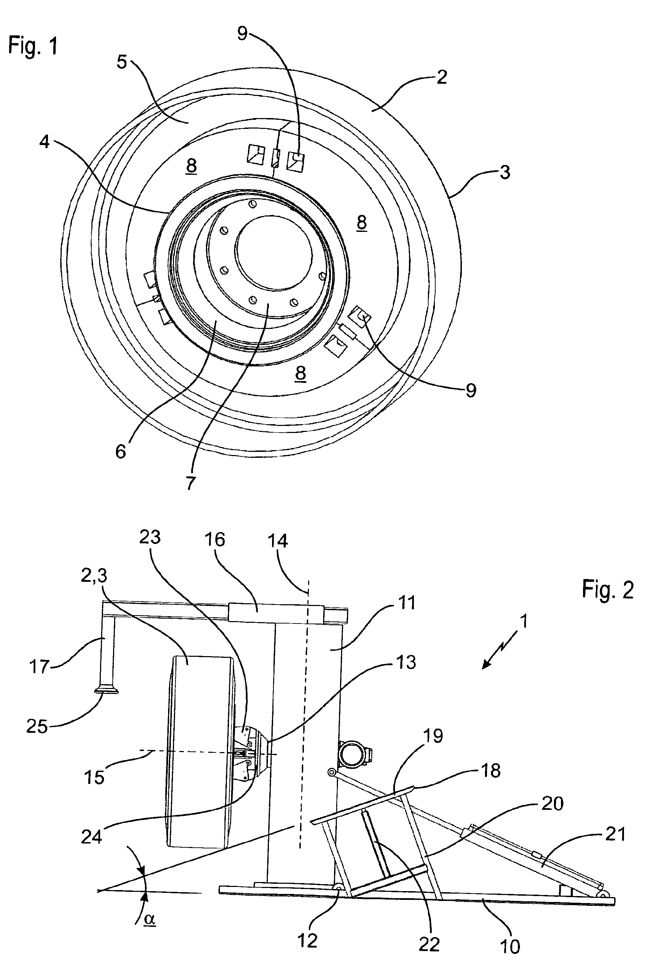

En référence à la figure 1, ladite roue 3 comporte une jante 4 assurant la liaison entre les flancs 5 dudit pneumatique 2 et un moyeu non représenté situé sur l'une des extrémités d'un essieu, ladite jante 4 comprenant au moins :
- une virole 6 globalement cylindrique,
- deux talons, non représentés, aptes à maintenir lesdits flancs 5, issus respectivement de chacun des bords de ladite virole 6 et s'étendant sensiblement perpendiculairement depuis cette dernière et en direction de l'extérieur, et
- un flasque médian 7 disposé à l'intérieur de la virole 6 et permettant la fixation de cette dernière sur ledit moyeu.

La roue 3 de tramway comporte en outre des segments 8, de préférence au nombre de trois, fixés entre eux autour de la virole 6 de la jante 4 à l'intérieur du pneumatique 2, lorsque ce dernier est monté sur ladite jante 4. Lesdits segments 8 sont fixés par tous moyens appropriés tels que, par exemple, des boulons 9 pour former un anneau circulaire autour de la virole 6 de la jante 4. Ainsi, lorsqu'un pneumatique 2 est crevé, les segments 8 viennent en contact avec la bande de roulement dudit pneumatique 2 et reprennent les charges mécaniques normalement supportées par le pneumatique 2 gonflé afin de permettre au tramway de continuer à circuler en toute sécurité. Pour ce faire, les segments 8 ont un diamètre extérieur supérieur à celui des talons de la jante 4 afin de reprendre lesdites charges mécaniques et de ne pas endommager lesdits talons qui ont une résistance mécanique moindre.

Compte tenu de la configuration des segments 8, on comprend bien que la mise en place d'un pneumatique 2 sur une roue 3 de tramway est longue et compliquée.

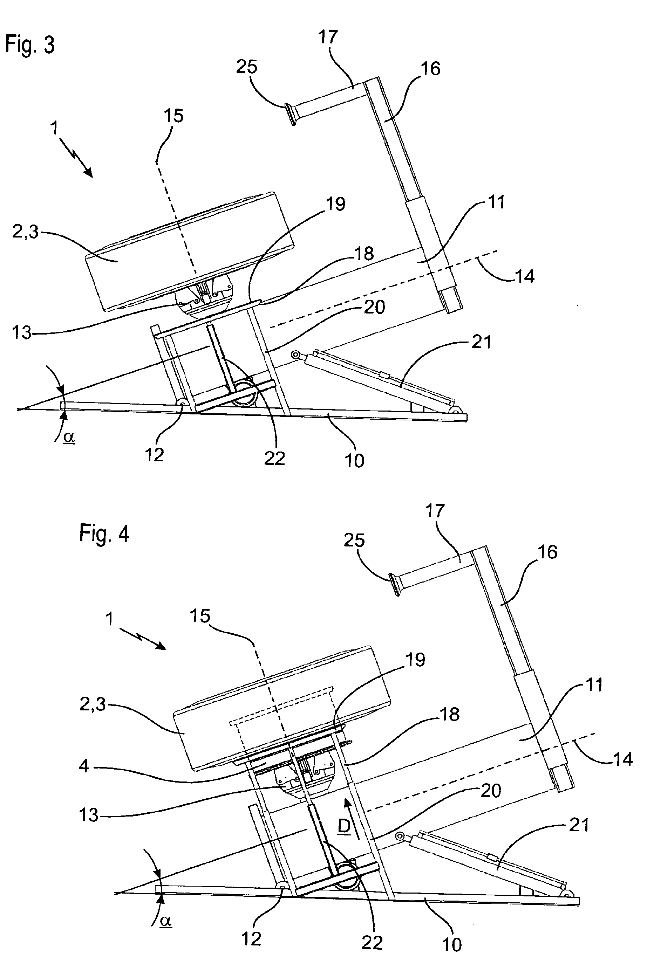

En référence aux figures 2 à 4, le dispositif 1 de montage/démontage comporte une base 10 horizontalement allongée, un premier châssis 11 globalement parallélépipédique et articulé à ladite base 10 autour d'un premier axe 12 sensiblement horizontal et perpendiculaire à l'axe longitudinal de la base 10, un mandrin 13 monté coulissant sur le premier châssis 11 le long de l'axe longitudinal 14 de ce dernier et agencé pour solidariser et faire tourner la jante 4 de la roue 3 d'un tramway autour d'un deuxième axe 15 de rotation sensiblement perpendiculaire audit axe longitudinal 14, un bras 16 fixé à l'une des extrémités libre dudit premier châssis 11 et extensible selon une direction sensiblement perpendiculaire audit axe longitudinal 14, et un porte-outils 17 issu de l'extrémité libre dudit bras 16 et s'étendant en direction de la base 10 de façon sensiblement perpendiculaire audit bras 16.

Le dispositif 1 comporte en outre un deuxième châssis 18 fixé sur ladite base 10 et comprenant deux barres 19 disposées de part et d'autre du premier châssis 11 et reliées chacune à ladite base 10 par au moins un guide 20 extensible, de préférence télescopique, et fixé sur l'un des bords longitudinaux de la base 10 de sorte que le dessus desdites barres 19 définissent un plan de travail.

Selon un mode de réalisation préféré, chaque barre 19 est reliée à la base 10 par une paire de guides 20 sensiblement parallèles entre eux, ladite barre 19 reliant alors l'extrémité libre des deux guides 20.

La base 10 est une plaque en acier qui est avantageusement pliée de sorte à avoir une section transversale en forme générale de U, pour des raisons évidentes d'accroissement de sa rigidité. La base 10 est avantageusement pourvue de roulettes non représentées pour permettre son déplacement dans l'atelier de maintenance où est situé le dispositif 1 de montage/démontage d'un pneumatique 2 selon l'invention.

Le premier châssis 11 est mis en mouvement autour dudit premier axe 12 entre une première position dans laquelle son axe longitudinal 14 est sensiblement vertical et une deuxième position dans laquelle ledit axe longitudinal 14 forme un angle α aigu avec la base 10, grâce à un premier actionneur 21 articulé entre le premier châssis 11 et la base 10, ledit premier actionneur 21 étant de préférence du type vérin linéaire hydraulique, l'angle α étant de préférence compris entre 10 et 30 degrés. Lorsque le premier châssis 11 est en position inclinée, son axe longitudinal 14 est alors sensiblement parallèle au plan défini par le dessus des deux barres 20 des deuxièmes châssis 18.

Dans une variante "extrême" non représentée, l'angle α pourra être nul et le premier châssis 11 pourra alors être mis en mouvement jusqu'à une deuxième position sensiblement horizontale. Toutefois, cette variante nécessite d'avoir un premier actionneur 21 ayant une grande course ce qui a notamment pour conséquence d'augmenter inutilement le prix de revient du dispositif 1 de montage/démontage selon l'invention.

Chaque barre 19 du deuxième châssis 18 est mobile et mise en mouvement suivant la direction d'extension des guides 20 entre une position rétractée dans laquelle les guides 20 sont rétractés et une position déployée dans laquelle les guides 20 sont étendus, grâce à un deuxième actionneur 22 disposé entre chaque barre 19 et la base 10, ledit deuxième actionneur 22 étant de préférence du type vérin linéaire pneumatique.

Le plan défini par le dessus desdites barres 19 est sensiblement parallèle à l'axe longitudinal 14 dudit premier châssis 11 lorsque ce dernier est dans sa deuxième position.

Le mandrin 13 comprend un système de blocage de la jante 4 comportant une pluralité de griffes 23 disposées à égale distance autour d'un moyeu 24 apte à pivoter par rapport au premier châssis 11 autour dudit deuxième axe 15 de rotation et agencé pour permettre l'auto-centrage de la jante 4 lors de sa mise en place sur ledit moyeu 24, lesdites griffes 23, qui servent à immobiliser ladite jante 4 sur le mandrin 13 pour permettre son entrainement en rotation et le montage/démontage d'un pneumatique 2, sont avantageusement revêtues d'une couche anti-rayure afin d'éviter d'endommager ladite jante 4.

Le mandrin 13 est monté coulissant sur le premier châssis 11 le long de l'axe longitudinal 14 de ce dernier de manière notamment à adapter sa position verticale en fonction de la position et des dimensions de la roue 3.

Le porte-outil 17 reçoit à son extrémité libre un outil 25 agencé pour s'insérer entre le pneumatique 2 et la jante 4 de la roue 3 afin de monter/démonter ledit pneumatique 2.

Pour positionner l'outil 25 du porte-outil 17 dans sa position de travail correspondant à la position dans laquelle ledit outil est prêt à être inséré entre la jante 4 et le pneumatique 2, le dispositif 1 de montage/démontage est tel que, d'une part, le bras 16, qui est extensible, est apte à se déplacer selon une direction sensiblement perpendiculaire à l'axe longitudinal 14 du premier châssis 11 et, d'autre part, le mandrin 13 est apte à coulisser sur le premier châssis 11 le long de l'axe longitudinal 14 de ce dernier de manière notamment à adapter la position de la roue 3 par rapport audit outil. Le mandrin 13 coulissant permet également une prise aisée d'une roue 3 en attente au sol suite à son démontage d'un essieu du tramway.

Selon un mode de réalisation préféré, le dispositif 1 de montage/démontage de pneumatiques selon l'invention comporte sur la base 10 au moins un moteur thermique, une pompe hydraulique et un réservoir d'huile pour alimenter cette dernière et des distributeurs hydrauliques (non représentés) pour distribuer l'huile sous pression issue de la pompe hydraulique aux différents actionneurs.

L'Homme du Métier n'aura aucune difficulté pour déterminer le nombre et le type de distributeurs hydrauliques à mettre en oeuvre.

Avec une telle configuration, en référence avec les figures 2 à 3, on procède selon les étapes suivantes pour démonter le pneumatique 2 d'une roue 3 de tramway.

La roue 3, qui a été préalablement démontée du moyeu associé de l'essieu du tramway, est bloquée sur le mandrin 13 grâce à son système de blocage et notamment à la pluralité de griffes 23 venant immobiliser la jante 4 sur le mandrin 13, le premier châssis 11 étant alors dans sa première position sensiblement verticale et chaque barre 20 du deuxième châssis 18 étant dans sa position rétractée.

Ensuite, l'outil 25 du porte-outil 17 est mis dans sa position de travail dans laquelle il peut être inséré entre la jante 4 et le pneumatique 2, grâce au(x) déplacement(s) du bras 16 et/ou du mandrin 13.

L'un des flancs 5 du pneumatique 2 est alors dégagé du talon associé de la jante 4 grâce à l'insertion de l'outil 25 entre la jante 4 et le pneumatique 2 combinée à la rotation du mandrin 13.

L'ensemble premier châssis 11 - roue 3 est ensuite mis dans sa deuxième position inclinée.

Les barres 19 du deuxième châssis 18 sont mises en mouvement suivant la direction d'extension des guides 20 jusqu'à leur position déployée pour venir en contact avec l'autre flanc 5 du pneumatique 2, qui est encore engagé dans la jante 4, et poussé ledit pneumatique 2 vers le haut suivant une direction D opposée à la base 10 afin de dégager suffisamment d'espace entre ledit flanc 5 et le talon de la jante 4 pour permettre à un opérateur d'accéder aux segments 8 et de procéder à leur démontage.

Une fois, les segments 8 démontés, l'opérateur peut ensuite dégager ledit flanc 5 de la jante 4, grâce à l'insertion de l'outil 25 entre ladite jante 4 et le pneumatique 2 combinée à la rotation du mandrin 13, afin de retirer complétement le pneumatique 2 de ladite jante et de procéder à son remplacement.

On comprend que ces étapes peuvent ne pas être exécutées dans l'ordre indiqué. Par exemple, le dégagement d'un des flancs 5 du pneumatique 2 du talon de la jante 4 pourra être réalisé après avoir mis le premier châssis 18 dans sa deuxième position inclinée.

Pour procéder au montage d'un nouveau pneumatique on procède en exécutant les étapes précédemment décrites dans le sens inverse.

Par ailleurs, dans la mesure où la position de l'ensemble premier châssis 11 - roue 3 peut être un peu élevée pour un opérateur de taille moyenne, le dispositif 1 de montage/démontage peut être associé à une plateforme de travail, non représentée et avantageusement munie de quatre roulettes, pour permettre audit opérateur d'accéder plus facilement aux segments 8. Cette plateforme de travail dispose de préférence d'emplacements destinés à recevoir l'outillage spécifique nécessaire aux opérations de montage/démontage du pneumatique 2.

On comprend bien que le dispositif 1 de montage/démontage de pneumatique 2 d'une roue 3 de tramway selon l'invention permet de :
- réduire significativement le temps nécessaire au remplacement d'un pneumatique 2, car les manipulations de la roue 3 complète sont réduites et se limitent à la seule opération de mise en place de la roue 3 sur le mandrin 13,
- limiter le nombre d'opérateur, a priori un seul opérateur doit suffire,
- augmenter la sécurité des opérateurs car les risques de pincement et d'écrasement qu'impliquaient les multiples manipulations sont quasiment supprimés,
- proposer une plateforme de travail apportant un confort supplémentaire à l'opérateur qui ne travaille plus au sol.

### Possibilité d'application industrielle

Le dispositif 1 selon l'invention s'applique plus particulièrement au montage/démontage de pneumatiques de tramways, mais il peut également être utilisé pour monter/démonter des pneumatiques d'un tout autre type de véhicules tel que les poids lourds ou engins de chantier.

Enfin, il va de soi que les exemples de dispositifs 1 de montage/démontage de pneumatiques conformes à l'invention qui viennent d'être décrits ne sont que des illustrations particulières, en aucun cas limitatives de l'invention.

## Revendications

1. Dispositif (1) de montage/démontage de pneumatique (2) d'une roue (3) de tramway munie d'une jante (4) assurant la liaison entre les deux flancs (5) dudit pneumatique (2) et le tramway, et une pluralité de segments (8) fixés autour de la jante (4) à l'intérieur du pneumatique (2) lorsqu'il est monté sur ladite jante (4), ledit dispositif (1) étant **caractérisé en ce qu'**il comporte :
- une base (10),
- un premier châssis (11) articulé à ladite base (10) autour d'un premier axe (12) sensiblement horizontal entre une première position dans laquelle l'axe longitudinal (14) du premier châssis (11) est sensiblement vertical et une deuxième position dans laquelle ledit axe longitudinal (14) forme un angle α aigu avec la base (10),
- un mandrin (13) monté coulissant sur le premier châssis (11) le long de son axe longitudinal (14) et agencé pour solidariser et faire tourner la roue (3) autour d'un deuxième axe (15) de rotation sensiblement perpendiculaire audit axe longitudinal (14),
- un deuxième châssis (18) comprenant deux barres (19) disposées de part et d'autre du premier châssis (11) et de manière à ce que leurs dessus définissent un plan sensiblement parallèle à l'axe longitudinal (14) dudit premier châssis (11) lorsqu'il est dans sa deuxième position, lesdites barres (19) étant mobiles entre une position rétractée et une position déployée dans laquelle elles sont agencées pour coopérer avec l'un des flancs (5) du pneumatique (2) pour dégager un espace suffisant entre ledit flanc (5) et la jante (4) afin de permettre à un opérateur d'accéder aux segments (8).

2. Dispositif (1) selon la revendication 1, **caractérisé en ce qu'**il comporte un bras (16) fixé à l'extrémité libre dudit premier châssis (11) et extensible selon une direction sensiblement perpendiculaire à son axe longitudinal (14), et un porte-outil (17) issu de l'extrémité libre dudit bras (16) et s'étendant en direction du mandrin (13) de façon sensiblement perpendiculaire audit bras (16), le porte-outil (17) recevant à son extrémité libre un outil (25).

3. Dispositif (1) selon l'une quelconque des revendications 1 ou 2, **caractérisé en ce que** chaque barre (19) est reliée à la base (10) par une paire de guides (20) extensibles sensiblement parallèles entre eux, ladite barre (19) étant mobile suivant la direction d'extension des deux guides (20) associés correspondant à une direction sensiblement perpendiculaire à l'axe longitudinal (14) dudit premier châssis (11) lorsque ce dernier est dans sa deuxième position.

4. Dispositif (1) selon l'une quelconque des revendications 1 à 3, **caractérisé en ce que** le premier châssis (11) est mis en mouvement autour dudit premier axe (12) grâce à un premier actionneur (21) articulé entre le premier châssis (11) et la base (10).

5. Dispositif (1) selon la revendication 4, **caractérisé en ce que** le premier actionneur (21) est du type vérin linéaire hydraulique.

6. Dispositif (1) selon l'une quelconque des revendications 1 à 5, **caractérisé en ce que** chaque barre (19) est mise en mouvement grâce à un deuxième actionneur (22) disposé entre chaque barre (19) et la base (10).

7. Dispositif (1) selon la revendication 6, **caractérisé en ce que** le deuxième actionneur (22) est du type vérin linéaire pneumatique.

8. Dispositif (1) selon l'une quelconque des revendications 1 à 7, **caractérisé en ce que** l'angle α est compris entre 10 et 30 degrés.

9. Dispositif (1) selon l'une quelconque des revendications 1 à 8, **caractérisé en ce qu'**il est associé avec une plateforme de travail montée sur quatre roulettes et disposant d'emplacements destinés à recevoir l'outillage spécifique nécessaire aux opérations de montage/démontage du pneumatique (2).

10. Procédé de montage/démontage de pneumatique (2) d'une roue (3) de tramway avec le dispositif (1) selon l'une quelconque des revendications 2 à 9, ladite roue (3) comportant une jante (4) assurant la liaison entre les deux flancs (5) dudit pneumatique (2) et le tramway, et une pluralité de segments (8) fixés autour de la jante (4) à l'intérieur du pneumatique (2) lorsqu'il est monté sur ladite jante (4), ledit procédé étant **caractérisé en ce qu'**il se compose au moins les étapes suivantes :
- blocage de la roue (3) sur le mandrin (13) ;
- mise en position de travail de l'outil (25) du porte-outil (17), grâce au(x) déplacement(s) du bras (16) et/ou du mandrin (13) ;
- dégagement hors de la jante (4) d'un des flancs (5) du pneumatique (2) ;
- mise en mouvement du premier châssis (11) pour l'amener depuis sa première position, dans laquelle son axe longitudinal (14) est sensiblement vertical relativement à la base (10), à sa deuxième position, dans laquelle ledit axe longitudinal (14) forme un angle α aigu avec ladite base (10);
- mise en mouvement des barres (19) du deuxième châssis (18) jusqu'à leur position déployée pour venir coopérer avec le flanc (5) restant dans la jante (4) et dégager suffisamment d'espace entre ledit flanc (5) et la jante (4) pour permettre à un opérateur d'accéder aux segments (8) ;
- démontage desdits segments (8) ;
- dégagement hors de la jante (4) du flanc (5) du pneumatique (2) restant dans la jante (4).

## Patentansprüche

1. Vorrichtung (1) zur Montage/Demontage eines Reifens (2) eines Straßenbahnrades (3), das mit einer Felge (4) versehen ist, die für die Verbindung zwischen den beiden Flanken (5) des besagten Reifens (2) und der Straßenbahn sorgt, und einer Vielzahl von Segmenten (8), die um die Felge (4) im Inneren des Reifens (2) befestigt sind, wenn er auf der besagten Felge (4) montiert ist, wobei die besagte Vorrichtung (1) **dadurch gekennzeichnet ist, dass** sie folgendes umfasst:
- eine Basis (10),
- ein erstes Chassis (11), das sich an der besagten Basis (10) um eine erste in etwa horizontale Achse (12) zwischen einer ersten Position, in der die Längsachse (14) des ersten Chassis (11) in etwa vertikal steht und einer zweiten Position bewegt, in der die besagte Längsachse (14) einen spitzen Winkel α mit der Basis (10) bildet,
- eine Spindel (13), die entlang ihrer Längsachse (14) gleitend auf dem ersten Chassis (11) montiert ist, und angeordnet ist, um das Rad (3) fest zu verbinden und um eine zweite Drehachse (15) drehen zu lassen, die in etwa senkrecht zur besagten Längsachse (14) verläuft,
- ein zweites Chassis (18), zwei Stangen (19) umfassend, die beiderseits des ersten Chassis (11) und derart angeordnet sind, dass ihre Oberseiten eine in etwa parallele Fläche zur Längsachse (14) des besagten ersten Chassis (11) definieren, wenn es sich in seiner zweiten Position befindet, wobei die besagten Stangen (19) zwischen einer eingezogenen Position und einer ausgefahrenen Position bewegt werden können, in der sie angeordnet sind, um mit einer der Flanken (5) des Reifens (2) zusammenzuwirken, um einen ausreichenden Raum zwischen der besagten Flanke (5) und der Felge (4) freizugeben, um es einem Werker zu ermöglichen, auf die Segmente (8) zuzugreifen.

2. Vorrichtung (1) nach Anspruch 1, **dadurch gekennzeichnet, dass** sie einen Arm (16) umfasst, der am freien Ende des besagten ersten Chassis (11) befestigt ist und in eine in etwa senkrecht verlaufende Richtung zu seiner Längsachse (14) ausgezogen werden kann, und einen Werkzeughalter (17), der aus dem freien Ende des besagten Armes (16) hervorgeht und sich in Richtung der Spindel (13) in etwa senkrecht zum besagten Arm (16) erstreckt, wobei der Werkzeughalter (17) an seinem freien Ende ein Werkzeug (25) aufnimmt.

3. Vorrichtung (1) nach einem der Ansprüche 1 oder 2, **dadurch gekennzeichnet, dass** jede Stange (19) durch ein Paar an ausziehbaren und in etwa parallel zueinander stehenden Führungen (20) mit der Basis (10) verbunden ist, wobei die besagte Stange (19) in die Ausziehrichtung der beiden zugeordneten Führungen (20) bewegt werden kann, die einer in etwa senkrechten Richtung zur Längsachse (14) des besagten ersten Chassis (11) entspricht, wenn sich letzteres in seiner zweiten Position befindet.

4. Vorrichtung (1) nach einem der Ansprüche 1 bis 3, **dadurch gekennzeichnet, dass** das erste Chassis (11) durch einen ersten Aktuator (21) um die besagte erste Achse (12) in Bewegung versetzt wird, der sich zwischen dem ersten Chassis (11) und der Basis (10) bewegt.

5. Vorrichtung (1) nach Anspruch 4, **dadurch gekennzeichnet, dass** der erste Aktuator (21) in der Art eines hydraulischen Linearzylinders ausgeführt ist.

6. Vorrichtung (1) nach einem der Ansprüche 1 bis 5, **dadurch gekennzeichnet, dass** jede Stange (19) dank eines zweiten Aktuators (22) in Bewegung versetzt wird, der zwischen jeder Stange (19) und der Basis (10) angeordnet ist.

7. Vorrichtung (1) nach Anspruch 6, **dadurch gekennzeichnet, dass** der zweite Aktuator (22) in der Art eines pneumatischen Linearzylinders ausgeführt ist.

8. Vorrichtung (1) nach einem der Ansprüche 1 bis 7, **dadurch gekennzeichnet, dass** der Winkel α zwischen 10 und 30 Grad liegt.

9. Vorrichtung (1) nach einem der Ansprüche 1 bis 8, **dadurch gekennzeichnet, dass** sie einer Arbeitsplattform zugeordnet ist, die auf vier Rollen montiert ist, und über Stellen verfügt, die dazu bestimmt sind, das Spezialwerkzeug aufzunehmen, das für die Vorgänge zum Montieren/Demontieren des Reifens (2) nötig ist.

10. Verfahren zur Montage/Demontage eines Reifens (2) eines Straßenbahnrades (3) mit der Vorrichtung (1) nach einem der Ansprüche 2 bis 9, wobei das besagte Rad (3) eine Felge (4) umfasst, die für die Verbindung zwischen den beiden Flanken (5) des besagten Reifens (2) und der Straßenbahn sorgt, und eine Vielzahl von Segmenten (8), die um die Felge (4) im Inneren des Reifens (2) befestigt sind, wenn er auf der besagten Felge (4) montiert ist, wobei das besagte Verfahren **dadurch gekennzeichnet ist, dass** es zumindest die folgenden Schritte umfasst:
- Blockieren des Rades (3) auf der Spindel (13);
- Positionieren des Werkzeugs (25) des Werkzeughalters (17) in die Arbeitsposition dank der Bewegung(en) des Armes (16) und/ oder der Spindel (13);
- Freilegen außerhalb der Felge (4) einer der Flanken (5) des Reifens (2);
- in Bewegung versetzen des ersten Chassis (11), um es von seiner ersten Position, in der seine Längsachse (14) in etwa vertikal im Verhältnis zur Basis (10) steht, in seine zweite Position zu bringen, in der die besagte Längsachse (14) einen spitzen Winkel α mit der besagten Basis (10) bildet;
- in Bewegung versetzen der Stangen (19) des zweiten Chassis (18) bis in ihre ausgefahrene Position, um mit der Flanke (5) zusammenzuwirken, die in der Felge (4) verbleibt, und einen ausreichenden Raum zwischen der besagten Flanke (5) und der Felge (4) freizugeben, um es einem Werker zu ermöglichen, auf die Segmente (8) zuzugreifen;
- Demontage der besagten Segmente (8);
- Freilegen der in der Felge (4) verbliebenen Flanke (5) des Reifens (2) außerhalb der Felge (4).

## Claims

1. Device (1) for mounting/removing a tyre (2) of a wheel (3) of a tram equipped with a rim (4) providing the connection between the two sidewalls (5) of said tyre (2) and the tram, and a plurality of segments (8) fixed around the rim (4) inside the tyre (2) when the latter is mounted on said rim (4), said device (1) being **characterised in that** it comprises:
- a base (10),
- a first frame (11) hinged onto said base (10) around a first axis (12) that is substantially horizontal between a first position wherein the longitudinal axis (14) of the first frame (11) is substantially vertical and a second position wherein said longitudinal axis (14) forms an acute angle α with the base (10),
- a chuck (13) mounted such that it slides on the first frame (11) along its longitudinal axis (14) and arranged to secure and rotate the wheel (3) around a second rotational axis (15) that is substantially perpendicular to said longitudinal axis (14),
- a second frame (18) comprising two bars (19) positioned on either side of the first frame (11) and such that their tops form a plane that is substantially parallel to the longitudinal axis (14) of said first frame (11) when it is in its second position, said bars (19) being capable of moving between a retracted position and a deployed position wherein they are arranged so as to engage with one of the sidewalls (5) of the tyre (2) to create sufficient space between said sidewall (5) and the rim (4) to allow an operator to access the segments (8).

2. Device (1) according to claim 1, **characterised in that** it comprises an arm (16) fixed to the free end of said first frame (11) and extendible along a direction that is substantially perpendicular to its longitudinal axis (14), and a tool holder (17) derived from the free end of said arm (16) and extending towards the chuck (13) in a substantially perpendicular manner to said arm (16), the free end of the tool holder (17) receiving a tool (25).

3. Device (1) according to any one of claims 1 or 2, **characterised in that** each bar (19) is connected to the base (10) via a pair of guides (20) that can extend in substantially parallel directions in relation to each other, said bar (19) being capable of moving towards the extension of the two associated guides (20) corresponding to a direction substantially perpendicular to the longitudinal axis (14) of said first frame (11) when the latter is in its second position.

4. Device (1) according to any one of claims 1 to 3, **characterised in that** the first frame (11) is moved around said first axis (12) by a first actuator (21) hinged between the first frame (11) and the base (10).

5. Device (1) according to claim 4, **characterised in that** the first actuator (21) is a hydraulic linear cylinder-type actuator.

6. Device (1) according to any one of claims 1 to 5, **characterised in that** each bar (19) is moved by a second actuator (22) positioned between each bar (19) and the base (10).

7. Device (1) according to claim 6, **characterised in that** the second actuator (22) is a pneumatic linear cylinder-type actuator.

8. Device (1) according to any one of claims 1 to 7, **characterised in that** the angle α is between 10 and 30 degrees.

9. Device (1) according to any one of claims 1 to 8, **characterised in that** it is associated with a work platform mounted on four wheels and equipped with locations intended to receive the specific tooling required for the mounting/removal operations of the tyre (2).

10. Method for mounting/removing a tyre (2) of a wheel (3) of a tram using the device (1) according to any one of claims 2 to 9, said wheel (3) comprising a rim (4) providing the connection between the two sidewalls (5) of said tyre (2) and the tram, and a plurality of segments (8) fixed around the rim (4) inside the tyre (2) when the latter is mounted on said rim (4), said method being **characterised in that** it includes at least the following steps:
- the wheel (3) is blocked on the chuck (13);
- the tool (25) of the tool holder (17) is placed in its working position by movement(s) of the arm (16) and/or the chuck (13);
- one of the sidewalls (5) of the tyre (2) is released from inside the rim (4);
- the first frame (11) is moved to bring it from its first position, wherein its longitudinal axis (14) is substantially vertical in relation to the base (10), to its second position, wherein said longitudinal axis (14) forms an acute angle α with said base (10);
- the bars (19) of the second frame (18) are moved as far as their deployed position to engage with the sidewall (5) that is still in the rim (4) and create sufficient space between said sidewall (5) and the rim (4) to allow an operator to access the segments (8);
- said segments (8) are removed;
- the sidewall (5) of the tyre (2) still in the rim (4) is released from inside the rim (4).
